# DEMANDE DE BREVET EUROPEEN

(11) **EP 0 962 791 A1**
(43) Date de publication de la demande: **08.12.1999**
(21) Numéro de dépôt: 99401187.2
(22) Date de dépôt: 17.05.1999
(51) Int. Cl.: G02B 6/16, G02B 6/293, H01S 3/06

(54) **Fibre optique filtrante à profil de photosensibilité modifié**

(30) Priorité: 02.06.1998 FR 9806905
(71) Demandeur: ALCATEL, 75008 Paris (FR)
(72) Inventeur: Riant, Isabelle, 91120 Palaiseau (FR); Sansonetti, Pierre, 91120 Palaiseau (FR)
(74) Mandataire: Smith, Bradford Lee

(57) **Abrégé**

On montre qu'en modifiant le profil de photosensibilité on peut mieux régler la courbe caractéristique d'un filtre et notamment éliminer un pic de réflexion (31) présent dans la bande (34) utile. L'inversion du profil de photosensibilité est assez importante. En pratique, dans le coeur de la fibre il y a seulement 20 % de matériau dopant photosensible par rapport à la quantité de matériau dopant photosensible présent dans la gaine de la fibre.

## Description

La présente invention a pour objet un filtre fréquentiel pour modifier le spectre de transmission d'une fibre optique. Dans l'invention le filtre fréquentiel est réalisé dans une portion de fibre optique, modifiée pour lui conférer des aptitudes filtrantes.

On connaît dans le domaine des fibres optiques filtrantes la réalisation de réseaux de Bragg dans des sections de coeur de ces fibres optiques. Ces réseaux de Bragg sont réalisés par des changements d'indice périodiques dans le matériau de la fibre. Ceux-ci sont obtenus par une irradiation ultraviolette effectuée dans ces sections de coeur de fibre. Le changement d'indice de réfraction provoqué par une insolation lumineuse est appelé "effet photo-réfractif". Cet effet est permanent. La propriété d'un matériau ayant un indice pouvant être modifié sous une telle irradiation lumineuse est appelé, ici, photosensibilité. Les caractéristiques de photosensibilité sont liées dans la technique actuelle à la présence d'un défaut de germanium dans la matrice silice de la fibre optique. D'autres dopants rendant le coeur de la fibre photosensible peuvent être utilisés. L'avantage du germanium est qu'il est normalement présent dans le coeur des fibres optiques car il permet d'augmenter l'indice de réfraction du coeur de la fibre par rapport à celui d'une gaine optique qui enrobe ce coeur. Cette augmentation d'indice, dite aussi marche d'indice, assure le guidage du signal lumineux dans le coeur de la fibre.

Lors de la fabrication d'une fibre optique sont successivement déposées à l'intérieur d'un tube des couches différentes de silice dopée ou non devant constituer progressivement, par leur adhésion sur la paroi interne du tube, les différentes couches constituant la fibre optique. Le diamètre d'une préforme ainsi constituée est homothétiquement plus grand que le diamètre de la fibre. Celle-ci est ensuite obtenue par échauffement et étirage de la préforme.

Pour réaliser le réseau de Bragg, on soumet à une irradiation ultraviolette sélective périodique une section du coeur de la fibre qui doit jouer le rôle de filtre. Par cette irradiation on réalise des altérations locales permanentes de l'indice de réfraction. Ces altérations sont liées à une modification chimique et structurelle des liaisons des atomes de germanium dans le coeur. La variation de la valeur de l'indice de réfraction du coeur de la fibre qui résulte de ces altérations peut atteindre quelques millièmes.

Le réseau se présente alors comme une modulation de l'indice de réfraction le long de la section formant un filtre atténuant.

Classiquement, lorsque les altérations du réseau d'indice sont perpendiculaires à l'axe de la fibre optique, la quantité de lumière non transmise par le filtre est réfléchie dans le coeur de la fibre optique avec un maximum de réflexion à la longueur d'onde de Bragg déterminée par une condition de résonance. Physiquement, un couplage est créé entre le mode fondamental se propageant co-directionnellement et le mode se propageant contradirectionnellement.

Selon la longueur de la section soumise à insolation, selon la période de reproduction des altérations le long de cette section, et selon la nature plus ou moins forte de l'altération (selon la nature plus ou moins importante de la variation de l'indice de réfraction à l'endroit des altérations), on peut respectivement modifier les caractéristiques de transmission suivantes : la largeur, la fréquence centrale du filtre, et le degré d'atténuation obtenu.

Pour de fortes variations d'indice photo-induites, il se produit également un couplage du mode fondamental dans des modes de gaine, à des longueurs d'onde plus courtes. Ceci peut être évité, selon l'article "Optical fiber design for strong gratings photimprinting with radiation mode suppression" présenté à la conférence OFC San Diego 95, Post Deadline 5, de E. DELEVAQUE et Al., par un dopage au germanium d'une partie de la gaine proche du coeur. Un co-dopant au fluor est alors ajouté dans la gaine pour rétablir la marche d'indice.

Dans une utilisation particulière, on a tenté avec de tels filtres de compenser des défauts de platitude du gain d'amplificateurs utilisés le long de liaisons optiques à très longue distance. En effet, sur de très longues distances, empruntant notamment des parcours sous-marins, l'atténuation kilométrique des ondes dans les fibres optiques est telle qu'il faut, de place en place, disposer des amplificateurs optiques. D'une manière connue ces amplificateurs présentent malheureusement l'inconvénient de favoriser, d'une manière systématique, certaines des composantes fréquentielles de la bande transmise.

Ce phénomène est d'autant plus gênant que de tels amplificateurs optiques sont utilisés dans des liaisons de type WDM (Wavelength Division Multiplexed) dans lesquelles différents canaux sont transportés par des porteuses optiques à différentes fréquences afin d'accroître la capacité globale et la modularité du système. Compte tenu du phénomène mis en jeu dans l'amplificateur optique, une telle favorisation serait rédhibitoire si on ne la compensait alors pas régulièrement. Dans cette application, il s'agit surtout d'aplatir le gain des amplificateurs optiques à fibre dopée à l'erbium. D'autres applications sont bien entendu envisageables.

Ce type de filtre à réseau de Bragg présente donc l'inconvénient d'agir comme un réflecteur partiel du signal amplifié, pour les composantes concernées par le filtrage. Une partie du signal optique à ces fréquences est donc renvoyée par réflexion dans l'amplificateur optique. Il en résulte que, dans la section amplificatrice, le signal réfléchi par le filtre revient interférer, mais également que le signal rétrodiffusé par la fibre est renvoyé dans la ligne venant dégrader les caractéristiques de transmission.

Pour éviter cette réflexion il a été imaginé, notamment dans l'article "Wideband gain flattened erbium fibre amplifier using a photosensitive fibre blazed grating" de R. Kashyap, R. Wyatt et R. J. Campbell et publié dans Electronics Letters du 21 janvier1993, vol. 29, n° 2, page 154 à 156, le principe d'incliner les franges représentatives des zones à modulation d'indice. Ceci peut être réalisé en faisant interférer deux faisceaux issus d'une source laser argon doublée en fréquence à 244 nm, et en inclinant la normale à la section servant de filtre par rapport à la bissectrice d'insolation des deux faisceaux. On peut également utiliser un masque de phase générant principalement deux ordres de diffraction +1 et -1, et un ordre zéro très faible. L'inclinaison est par exemple de huit degrés dans l'article décrit. L'avantage de l'inclinaison est de supprimer la réflexion. En effet, cette inclinaison a pour effet de coupler le mode fondamental se propageant co-directionnellement avec des modes radiatifs contradirectionnels. Ces modes radiatifs sont très rapidement absorbés par la gaine, ils sont appelés modes de gaine. L'enveloppe spectrale de l'ensemble des composantes fréquentielles dans ces différents modes de gaine peut alors être utilisée comme caractéristique d'un filtre utilisé pour compenser le gain des amplificateurs optiques.

L'inconvénient présenté par cette technique se situe dans la sélectivité du filtre. En effet, en utilisant des fibres standards de télécommunication, il n'est pas possible, par exemple, avec un tel filtre à réseau de Bragg et à inclinaison des altérations, d'obtenir une bande spectrale du filtre inférieure à 20 nm. Il est possible en théorie de jouer sur le diamètre du coeur pour réduire la largeur de bande du filtre. Le filtre est ainsi plus sélectif si le diamètre de ce coeur est plus grand, par exemple 9 µm au lieu de 3µm. Mais cette augmentation du diamètre est limitée. De plus elle présente, entre autres inconvénients, celui de devoir réaliser des sections d'adaptation entre une fibre avec un coeur à grand diamètre, et une fibre avec un diamètre standard (de l'ordre déjà de 9 µm). Ces adaptations sont délicates à réaliser.

Selon le but recherché, l'atténuation par les modes de gaine est meilleure mais la longueur du réseau ne peut plus jouer pour rétrécir la largeur de bande du filtre. En pratique plus l'angle est faible et plus le filtre peut être sélectif mais en même temps plus il est le lieu d'une émission résiduelle par réflexion, du type de celle des franges droites. A l'opposé plus l'angle est incliné, moins ce phénomène de réflexion se fait sentir mais plus la largeur de bande du filtre est grande, c'est-à-dire moins il est sélectif. Le compromis obtenu dans tous les cas n'est pas satisfaisant et on cherche à l'améliorer.

Un deuxième problème de ce type de filtre est lié à un rebond de filtrage dans une bande basse fréquence, voisine de la bande utile où a été réalisé le filtrage. Ce rebond est dû à la réflexion résiduelle, citée ci-dessus, dans le mode fondamental. Au départ, ce rebond n'est pas gênant puisque les amplificateurs optiques connus ont une bande spectrale limitée et que ce rebond de filtrage s'en trouve en dehors. Il doit néanmoins rester faible. Cependant, dans d'autres applications, notamment dans des applications terrestres, le filtre va être utilisé sélectivement, pour atténuer différentes composantes dans la bande utile. La place spectrale de ce rebond sera donc aussi dans la bande utile. Dans ces autres applications, ce rebond de filtrage est alors néfaste.

Troisièmement, on a précisé précédemment que l'atténuation spectrale n'est en fait que l'enveloppe d'atténuations à différentes composantes spectrales. Ceci signifie qu'à l'intérieur de cette enveloppe, des composantes spectrales sont effectivement filtrées, alors que d'autres le sont moins, voire pas du tout. Ceci est dû à la discrétisation des modes de gaine. Dans ces conditions, l'enveloppe de filtrage correspond à un assemblage de filtres discrets, à bande relativement étroite, et séparés les uns des autres par des espaces fréquentiels où le filtrage n'est pas réalisé. Un tel filtre ne peut donc pas être utilisé pour égaliser correctement le gain des amplificateurs optiques.

Dans l'invention on a résolu le deuxième problème et on a obtenu une suppression presque totale du rebond en inversant le profil de photosensibilité coeur-gaine. On a mis en évidence en effet que réduire la photosensibilité dans le coeur permettait de réduire l'intensité du réseau d'indice dans le coeur, et donc son action. La réflexion résiduelle dans le mode fondamental se propageant dans le coeur se trouve ainsi diminué.

L'invention a donc pour objet une fibre optique filtrante à réseau de Bragg comportant en plusieurs couches un coeur de fibre et une gaine de fibre, la fibre étant dopée par un matériau photosensible altérable, pour constituer le réseau de Bragg par altération périodique de ce matériau le long d'une section de cette fibre, caractérisée en ce qu'une partie interne de la fibre présente un indice de photosensibilité inférieur à l'indice de photosensibilité d'une partie externe à cette partie interne.

L'invention sera mieux comprise à la lecture de la description qui suit et de l'examen des figures qui l'accompagnent. Celles-ci ne sont données qu'à titre indicatif et nullement limitatif de l'invention. Les figures montrent :
- Figure 1 : une préforme de fibre optique utilisable pour réaliser la fibre optique filtrante de l'invention ;
- Figure 2 : la représentation d'un procédé utilisable pour préparer la fibre optique de l'invention à sa fonction filtrante ;
- Figures 3a à 4b : des profils, inversés, de photosensibilité et des caractéristiques de filtrage,mis en oeuvre dans l'invention.
- Figure 5 : un diagramme fréquentiel montrant, dans une application, des défauts d'amplification d'amplificateurs optiques à fibres dopées à l'erbium, et la correction apportée par le filtre de l'invention ;
- Figures 6a et 6b : des profils respectivement d'indice de réfraction et de photosensibilité du coeur et de la gaine de la fibre optique filtrante de l'invention.

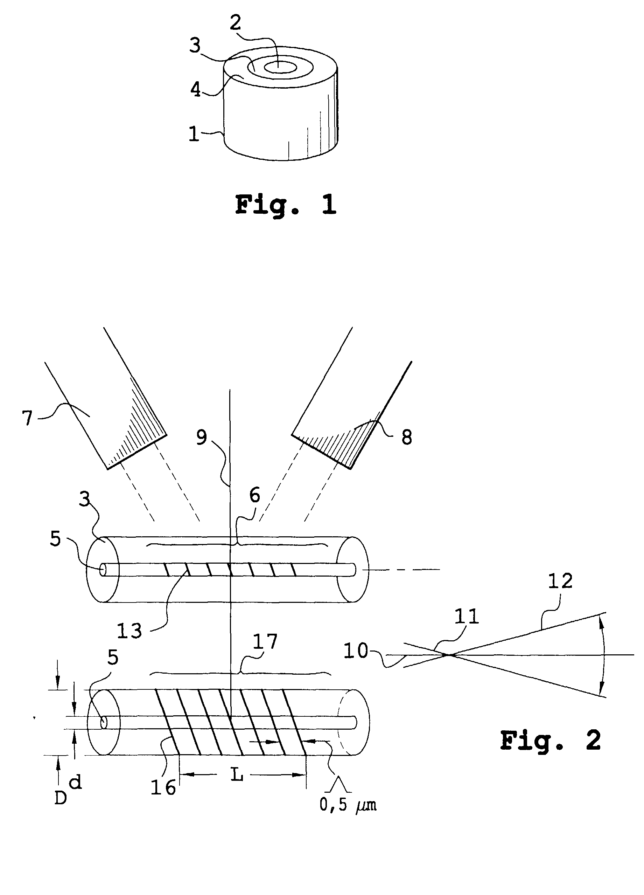

La figure 1 montre une préforme 1 de fibre optique. La préforme 1 comporte un premier cylindre 2 entouré par une couronne cylindrique intérieure 3 et une couronne cylindrique extérieure 4. Ce cylindre et ces couronnes représentent les différentes couches de matériaux présents dans la fibre optique quand elle est réalisée par étirage. Les dimensions radiales des cylindres et couronnes cylindriques 2 à 4 sont homothétiques des dimensions, bien plus faibles, des parties correspondantes dans la fibre optique, une fois qu'elle est fabriquée par étirage. En pratique, un coeur et une gaine de fibre correspondant respectivement aux couches 2 et 3 sont réalisés chacun en plusieurs couches. Les couches 2 et 3 sont ainsi dopées avec différents dopants au fur et à mesure de la réalisation de la préforme.

La figure 2 montre un procédé préféré d'insolation d'un matériau photosensible utilisable pour créer un réseau d'altérations indicielles, dit aussi réseau d'indice, à l'intérieur du coeur 5 d'une fibre. Dans une fibre de l'état de la technique, le coeur 5 de la fibre est dopé au moment de la fabrication du cylindre 2 avec du germanium. Ce germanium est soumis au moment de l'insolation, sur une longueur correspondant à une section filtrante 6, à un éclairement produit par deux faisceaux lasers 7 et 8, issus d'une source laser cohérente, inclinés l'un par rapport à l'autre. La bissectrice 9 de l'angle que ces faisceaux forment est orientée sensiblement perpendiculairement à l'axe 10 du coeur 5. Comme rapporté dans le document cité, les faisceaux lasers 7 et 8 peuvent être issus d'un laser argon doublé en fréquence à une longueur d'onde de 244 nm. Selon l'enseignement de ce document, en inclinant l'axe 10 vers des directions 11 ou 12 par rapport à la normale à la bissectrice 9, on peut obtenir que les franges d'interférence, et donc le réseau des altérations, se présentent sous une forme inclinée. On a représenté sur la figure 2, grossièrement, en coupe des tranches 13 de disques inclinées. Dans la pratique le degré d'altération évolue entre un minimum et un maximum progressivement entre chaque frange. Il n'y a pas vraiment de disques, mais la représentation est commode.

En variante, le réseau d'indice incliné peut aussi être réalisé par un dispositif à masque de phase.

Il est connu de fabriquer des coeurs 5 avec neuf micromètres de diamètre d. Ainsi la fibre standard SMF-28 de Corning lncorporated, New York, Etats Unis d'Amérique, est une fibre monomode avec un tel diamètre d. Les contributions des cylindres 3 et 4 forment un ensemble gaine-tube de ces fibres. Dans un exemple notamment celui indiqué ci-dessus, le diamètre extérieur D de cet ensemble est de l'ordre de 125 à 130 micromètres.

Selon l'invention, plutôt que de se contenter de doper le matériau 2 servant à fabriquer le coeur 5 avec du germanium on a également dopé le matériau 3 composant la gaine. De ce fait, au moment de l'insolation, des franges 16 se développent non seulement dans le coeur 5 mais également dans la gaine 3. Là encore, le bas de la figure 2 est schématique, ses franges n'étant pas des disques.

La section 17 où se développent ces altérations indicielles dépend des limites d'insolation. Elle a une longueur L. Les écarts entre les maxima des différentes altérations occupent un espace Λ (de l'ordre de 0,5 micromètres) correspondant à l'interfrange. De telles périodes permettent d'obtenir des filtres aux longueurs d'onde de l'infrarouge (environ 1,5 µm). La force de l'altération est liée à la puissance des deux faisceaux lasers 7 et 8, à la durée d'insolation et à la concentration en germanium. Ces grandeurs sont des paramètres utiles pour régler le filtre constitué par la section 17.

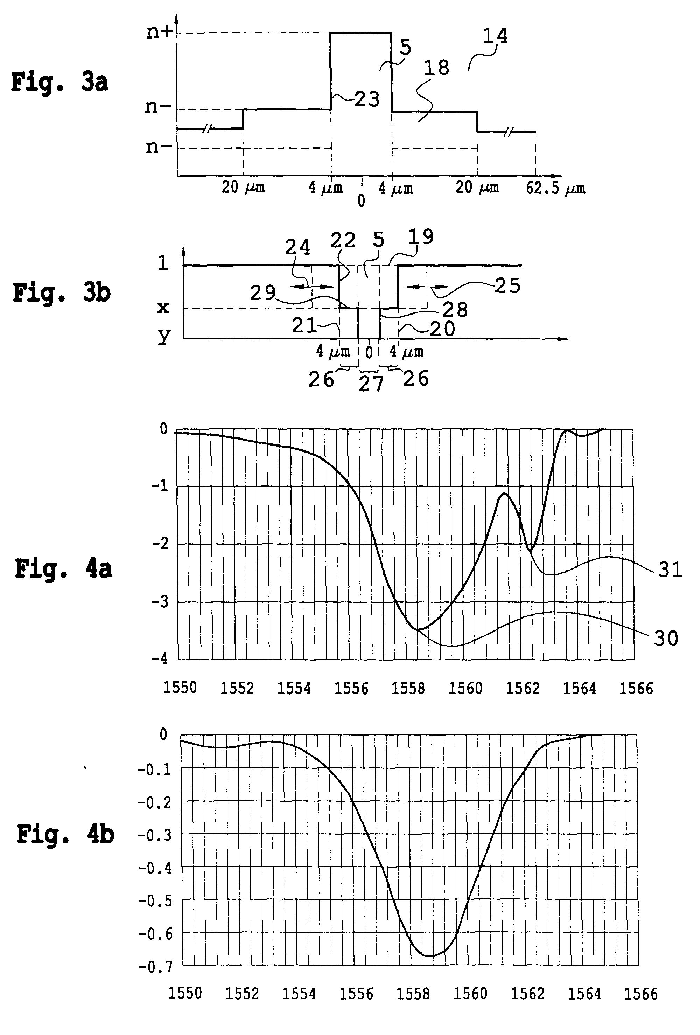

La figure 3a montre un profil d'indice de réfraction à réaliser de préférence dans la fibre optique. Le coeur 5 de la fibre est ainsi dopé pour atteindre un indice de réfraction n+, par exemple une valeur comprise entre 1,448 et 1,452. Dans une partie interne 18 de la gaine 3 (dans l'exemple préféré, la partie interne 18 correspond à toute la gaine 3), on a par ailleurs dopé le matériau servant à la constituer avec du germanium et avec du fluor (ou un autre dopant ayant des mêmes effets). L'effet recherché est de modifier l'indice de réfraction normale du verre de silice. Par exemple ceci peut conduire, dans la partie 18, la gaine 3 de la fibre optique à avoir un indice de réfraction n- de l'ordre de 1,442 à 1,446. La marche 23 d'indice ainsi réalisée à la séparation coeur 5 - gaine 3 est alors égale à n+ - n-. Dans le cas d'un diamètre de gaine 3 élevé, par exemple 20 µm, on peut considérer que cette marche d'indice est la marche d'indice nécessaire à une propagation monomode. On verra par la suite comment interviennent ces différents facteurs pour perfectionner le filtre de l'invention. Notamment, après avoir choisi le diamètre de la partie de la gaine dopée au germanium pour satisfaire à la contrainte de largeur du filtre, on a recherché la valeur de la marche d'indice Δn optimale pour que l'enveloppe de filtrage soit la plus lisse possible. Par exemple pour un diamètre de coeur de 8 µm, on a trouvé qu'une marche d'indice de 5.10⁻³ (1,449-1,444) était la mieux adaptée. Les différents dopants de gaine servent à régler cette marche dans la zone 18.

La figure 3b montre un profil inversé de photosensibilité réalisé selon l'invention dans la fibre. Ce profil de photosensibilité est normalisé à 1. Cette valeur normalisée correspond à une concentration donnée de matériau dopant photosensible, réparti en différents endroits de la fibre, ainsi qu'à un procédé commun à toute la fibre d'insolation du matériau photosensible. La figure 3b est donc, en résumé, représentative de la concentration du matériau dopant photosensible dans les différentes parties de la fibre. Elle montre une inversion de photosensibilité, des parties externes de la fibre étant plus photosensibles que des parties internes.

Dans l'état de la technique, représenté par le haut de la figure 2, seul le matériau 2 servant pour le coeur de la fibre était dopé avec du matériau photosensible. Ceci est par exemple rappelé sur la figure 3b par les tracés 19, 20 et 21 qui marquent respectivement le niveau de la concentration en produit dopant, (en germanium), et les limites en abscisses (à 4 µm de part et d'autre du centre du coeur 5) de l'endroit où le produit dopant était implanté. Dans l'invention on va essentiellement créer une marche 22 de photosensibilité qui présente la particularité qu'une partie interne de la fibre, ici par exemple le coeur 5, présente un indice de photosensibilité (donc une concentration en matériau photosensible altérable) inférieur ou égal (mais de préférence inférieur) à un indice de photosensibilité d'une partie extérieure, par exemple la couche interne 18 de gaine. Le profil de photosensibilité est donc inversé.

La marche 22 implique alors que, dans la couche 18 de gaine, du matériau photosensible est présent. Pour éviter alors le déplacement de la marche 23 d'indice de réfraction au-delà du coeur 5, il est prévu que dans la partie 18 les effets du dopage en matériau photosensible sur l'indice de réfraction soient compensés par un dopage avec un matériau ayant un effet contraire de ce point de vue : par exemple avec du fluor. Dans ces conditions il est possible que la marche 22 soit déplacée, au-delà de la marche 23, selon les flèches 24, 25 (symétriquement) dans la partie 18 de la gaine 3. De ce fait, même si la limite 22 de dopage en germanium n'est pas placée à l'endroit 23 de la transition coeur gaine, elle n'empêchera pas le bon fonctionnement en guidage de la fibre optique puisque la marche d'indice 23 sera maintenue au même endroit.

Plutôt que de déplacer la marche 22 inversée de photosensibilité dans la gaine 3, il peut être réalisé un coeur 5 de fibre ayant une concentration en matériau photosensible nominale dans une partie externe, notamment une couronne 26, mais ayant un déficit, voire une absence totale de matériau photosensible dans une partie centrale 27. La figure 3b montre aussi cette variante. Il n'y a pas de difficulté à obtenir une telle réalisation puisque dans la pratique, les matériaux 2 et 3 de coeur et de gaine de la figure 1 sont eux même réalisés sous forme de couronnes concentriques, et peuvent être réalisés avec des matériaux différents. La particularité de l'invention se situe donc, ici, dans le fait que la partie centrale 27 du coeur 5 sera munie d'un dopant contribuant à la marche 23 d'indice de réfraction (par exemple du phosphore) mais ne contribuant pas, ou moins, à l'indice de photosensibilité dans cette partie.

En combinant les deux techniques, la marche d'indice de photosensibilité peut même être remplacée par une double marche 22-28 de photosensibilité en combinant les deux variantes. Dans ce cas, le profil de photosensibilité présente un escalier 29. Les niveaux relatifs x et y de photosensibilité ainsi que les abscisses des marches 22 et 28 permettent d'ouvrir un vaste domaine de réglage et de choix des différents paramètres du filtre. Sur la figure 3b, y vaut 0 mais ce n'est pas une obligation. En établissant l'inversion de la figure 3b on aboutit au résultat recherché que le rebond de réflexion résiduelle du mode principal dans le filtre est neutralisé.

La figure 4a, représente dans un exemple, pour un filtre dans lequel les altérations d'indice sont inclinées de 3°, et pour lequel la longueur L de la section filtrante est égale à 0,7 mm, la courbe caractéristique de filtrage alors que le profil de photosensibilité est classique (avec une photosensibilité nominale 19 dans le coeur de la gaine). Dans ce cas, le filtrage recherché est grossièrement obtenu par un pic d'atténuation 30 qui résulte du couplage du mode principal dans des modes de gaine, ici avec une fréquence centrale correspondant sensiblement à 1558,2 nm de longueur d'onde.

La figure 4a montre qu'à coté du pic 30 recherché, le filtre ainsi réalisé provoque une réflexion 31 dans un mode fondamental centré à f0 de l'ordre de 1562,2 nm. Autant l'atténuation 30 est recherchée, autant l'atténuation du pic 31 est en fait néfaste. Il se pourrait alors que la fréquence de l'atténuation 31 soit située pour une application donnée, dans une bande à transmettre. Dans ce cas l'intervention intempestive de l'atténuation latérale 31 serait rédhibitoire.

Sur la figure 4b, on a montré l'amélioration essentielle apportée par l'invention : la suppression du pic de réflexion 31. Par ailleurs le gain de filtrage avec un tel filtre peut être de 0,7 dB alors qu'il culmine à 4 dB avec le filtre de la figure 4a. En conséquence dans l'invention, si une forte atténuation est nécessaire, on juxtaposera dans la fibre plusieurs sections 17 de filtrage, suffisamment espacées les unes des autres, et apportant chacune une contribution lissée de filtrage.

Selon un perfectionnement de l'invention, on s'est rendu compte ensuite qu'il y avait même un optimum auquel on aboutissait quand on voulait retenir certains paramètres de fabrication pour supprimer le mode de réflexion fondamental 31 situé sur le bord de la bande de filtrage du filtre, vers les basses fréquences.

Dans l'invention, on a pu montrer que l'obtention d'un optimum était à chaque fois possible, quels que soient les paramètres n+, n-, x, y, abscisse 22 ou abscisse 28 qu'on modifiait, ainsi que quels que soient le taux de concentration en produit dopant correspondant à la concentration nominale (niveau 1 nominal) et le degré d'altération déterminé.

La méthode de choix des paramètres de la fibre est la suivante. On choisit d'abord la largeur de la zone 22 pour satisfaire à des contraintes de largeur de filtrage. On choisit ensuite une marche d'indice Δn pour avoir un filtre à peu près symétrique. Puis on règle la hauteur de l'inversion pour éliminer le rebond 34. Enfin on choisit la longueur de la section 17 pour parfaire le lissage. Ainsi, un filtre atténuant non réflecteur d'une largeur spectrale de 9 nm peut être réalisé avec un réseau d'indice, d'inclinaison 3°, dans une fibre à gaine photosensible d'épaisseur 20 µm. Un optimum a pu être trouvé sur la forme du filtre pour une marche d'indice de 5.10⁻³. Puis, en ce qui concerne le profil de photosensibilité, un optimum a été trouvé afin de réduire la réflexion dans le mode fondamental. Cet optimum est un rapport de photosensibilité entre le coeur et la gaine de 20 %. Il peut être compris entre 10% et 60% pour d'autres fonctions de filtrage recherchées.

La figure 4b correspond ainsi au cas de la figure 3b dans laquelle il n'y a pas de zone 27, et dans laquelle la valeur de x est de 20%. Dans cet exemple, la concentration en germanium dans la gaine est de 5 % en pourcentage massique. Elle est donc de 1 % en pourcentage massique dans tout le coeur 5 de la fibre.

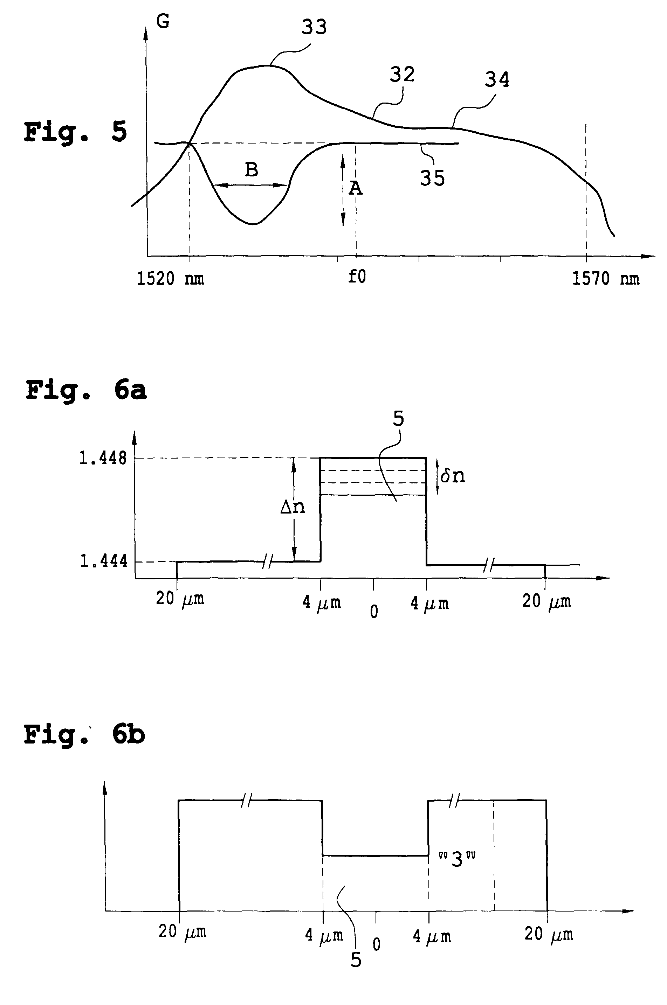

La figure 5 montre une courbe 32 représentant symboliquement, et avec quelques exagérations, les effets néfastes des amplificateurs optiques à base de fibre optique dopée à l'erbium (EDFA Erbium Doped Fibre Amplifiers). De tels amplificateurs sont intéressants parce qu'ils ont une grande bande spectrale, centrée sur les longueurs d'ondes utiles dans la transmission optique. Ils présentent cependant l'inconvénient d'imposer une sur-amplification 33 à certains endroits du spectre par rapport à l'amplification 34 à d'autres endroits du spectre. C'est cette sur-amplification 33 qu'il faut combattre avec un filtre interposé dans la propagation des ondes issues de ces amplificateurs.

La courbe 35 représente schématiquement le filtre obtenu par mise en place d'une section 17 filtrante réalisée selon la partie basse de la figure 2. Les caractéristiques du filtre sont sa fréquence caractéristique f0, l'amplitude A de l'atténuation sélective qu'il impose, et sa largeur de bande B. D'une manière connue, f0 dépend de Λ, A dépend du degré d'altération des matériaux photosensibles insérés dans la fibre, et, pour un réseau de Bragg classique à altérations droites, B dépend de la longueur L de la section 17. Plus la longueur L est grande plus la largeur de bande B peut être réduite.

Dans l'état de la technique, avec altérations inclinées, où seul le coeur 5 de la fibre était dopé avec du germanium, la largeur de bande B était supérieure à la largeur de bande de la sur-amplification 33. En conséquence le filtre était mal adapté fréquentiellement. Pour les raisons invoquées, avec des altérations inclinées il ne servait à rien que la longueur L soit agrandie.

Les figures 6a et 6b montrent respectivement le profil d'indice et le profil de photosensibilité réalisés dans la fibre selon un perfectionnement de l'invention. Par rapport à une abscisse 0, centrale au milieu du coeur 5 de la fibre, on distingue de part et d'autre les abscisses, à quatre micromètres environ, des extrémités du diamètre du coeur 5 ainsi que les abscisses, à 20 micromètres environ, des extrémités du diamètre de la gaine 3. Le profil d'indice de réfraction est tel qu'il montre une marche Δn de l'ordre de 0,5 %. Ce profil d'indice est nécessaire pour assurer la propagation d'un seul mode principal optique dans le coeur de la fibre. Ce profil d'indice est obtenu en dopant le coeur de la fibre avec des matériaux ayant cette propriété d'augmentation d'indice de réfraction. Généralement on effectue un dopage au germanium. On peut aussi utiliser du phosphore permettant également d'élever l'indice.

Le germanium présente une photosensibilité utilisable, du fait des modifications des liaisons chimiques et de la structure par insolation, pour constituer le réseau d'altérations indicielles. Ainsi, le long de la section 17, l'indice de réfraction évoluera selon une variation δn progressivement et périodiquement d'une frange à l'autre. La variation δn est une fraction de Δn.

La figure 6b montre que le profil de photosensibilité a été étendu dans tout ou partie du corps de la fibre : dans le coeur 5 et dans la gaine 3. Dans le cadre de l'extension, l'indice de photosensibilité est soit le même partout, soit il est plus faible dans le coeur 5. De préférence, on a étendu le profil de photosensibilité à toute la couche de gaine. Dans cette réalisation préférée, cette couche de gaine a été fixée à 20 µm. Cela a permis d'obtenir une largeur de filtrage de 9 à 10 nm. Il aurait été possible de limiter l'extension à une partie interne de la couche de gaine 3. En jouant sur la largeur de l'extension, dans tout ou partie de la gaine 3 on joue en effet sur la sélectivité du filtre. D'autres conditions permettraient de limiter encore plus la largeur de filtrage.

On a alors pu montrer par des expérimentations que cette disposition, associé à l'inclinaison des franges, permettait d'ajuster la largeur B de filtrage du filtre pour convenir à une application recherchée. Par exemple, dans le cas où cette application concernerait une amplification comme montrée sur la figure 5, on est ainsi capable de compenser la sur-amplification 33 avec une bande de fréquence B du filtre de l'ordre de 8 ou 9 nm. Selon la largeur de B voulue, la partie dopée de la couche 3 sera plus ou moins épaisse.

Le fait de doper la gaine de la fibre dans la section filtrante avec du germanium peut conduire, comme dans le coeur 5, à modifier le profil d'indice dans cette couche externe. On retient normalement un dopage en germanium du coeur avec un pourcentage massique compris entre 0 % et 11%. Si la gaine 3 est réalisée de la même façon, le profil d'indice ne permet plus de délimiter correctement le coeur 5 de cette gaine 3. La fibre ne pourra plus propager correctement l'onde principale.

Pour remédier à ce problème, on prévoit dans l'invention de doper la gaine 3 avec du fluor. Le fluor a, sur l'indice de réfraction, un effet contraire à celui du germanium. Il réduit l'indice de réfraction au lieu de l'augmenter. En compensant les quantités de fluor et de germanium dans la gaine, on y maintient alors un profil d'indice conforme à celui montré sur la figure 6a, alors que par ailleurs le profil de photosensibilité reste celui de la figure 6b, du fait de la présence du dopage au germanium. Dans ces conditions on est réellement capable de fabriquer une section L filtrante comme celle montrée en bas de la figure 2 où le réseau d'indice s'étend à la totalité ou à une partie de la gaine 3.

Dans l'invention on a ainsi fictivement su augmenter le rayon de coeur en le multipliant par cinq (passage de 4 à 20 µm). De ce fait le filtre devient plus sélectif.

De plus on a pu avec des essais se rendre compte qu'il y avait un optimum, du point de vue de l'enveloppe de filtrage, lorsque la longueur L valait 0,7 mm. Dans ce cas en effet, on a pu constater qu'on ne pouvait plus discerner les différentes atténuations correspondant aux couplages discrets dans les différents modes de gaine. L'enveloppe 35 ne présente plus d'oscillations.

## Revendications

1. Fibre optique filtrante à réseau de Bragg comportant en plusieurs couches un coeur (5) de fibre et une gaine (3) de fibre, la fibre étant dopée par un matériau photosensible altérable, pour constituer le réseau de Bragg par altération périodique de ce matériau le long d'une section (6, 17) de cette fibre, caractérisée en ce qu'une partie interne de la fibre présente un indice de photosensibilité inférieur (22) à l'indice de photosensibilité d'une partie externe à cette partie interne.

2. Fibre selon la revendication 1, caractérisée en ce que les parties interne et externe sont respectivement placées dans le coeur (26) et dans la gaine (24, 25) de la fibre.

3. Fibre selon l'une des revendications 1 à 2, caractérisée en ce que les parties internes et externes sont placées (26, 27) dans le coeur de la fibre.

4. Fibre selon l'une des revendications 1 à 3, caractérisée en ce que la diminution de photosensibilité est obtenue par une diminution de la concentration d'un dopant photosensible, les deux concentrations dans la partie interne et dans la partie externe étant de préférence dans un rapport de 20 %.

5. Fibre selon l'une des revendications 1 à 4, caractérisée en ce que le dopant photosensible est du germanium.

6. Fibre selon l'une des revendications 1 à 5, caractérisée en ce qu'à un endroit (27) où le dopant photosensible est présent en concentration moindre, on dope complémentairement la fibre par un dopant non photosensible.

7. Fibre selon la revendication 6, caractérisée en ce que le dopant non photosensible est du phosphore.

8. Fibre selon l'une des revendications 1 à 7, caractérisée en ce que le degré d'infériorité de photosensibilité est réglé à un optimum pour éliminer un mode (31) de transmission lumineuse réfléchi par la section filtrante, cet optimum étant fonction du profil d'indice de réfraction coeur-gaine.

9. Fibre selon l'une des revendications 1 à 8, caractérisée en ce que la gaine est dopée avec un matériau à indice de réfraction altérable et en ce que ce matériau de gaine est altéré en un réseau longitudinal d'altérations indicielles, périodiques, et inclinées.

10. Fibre selon l'une des revendications 1 à 9 caractérisée en ce que la longueur d'une section filtrante est inférieure à 1 mm, de préférence égale à 0,7 mm.
